Europäisches Patentamt

European Patent Office

Office européen des brevets

(19)

(11) Numéro de publication: **0 251 916**
**A1**

(12) **DEMANDE DE BREVET EUROPEEN**

(21) Numéro de dépôt: **87401489.7**

(22) Date de dépôt: **29.06.87**

(51) Int. Cl.³: **H 02 J 7/14**

(30) Priorité: **04.07.86 FR 8609730**

(43) Date de publication de la demande:
**07.01.88 Bulletin 88/1**

(84) Etats contractants désignés:
**DE ES GB IT**

(71) Demandeur: **VALEO**
**64, avenue de la Grande Armée**
**F-75848 Paris Cédex 17(FR)**

(72) Inventeur: **Hamelin, Gilbert**
**33, Avenue Henri Barbusse**
**F-95670 Marly la Ville(FR)**

(72) Inventeur: **Palma, Lucien**
**10/12, rue Auguste Cain**
**F-75014 Paris(FR)**

(74) Mandataire: **Michardière, Bernard et al,**
**C/O CABINET PEUSCET 68, rue d'Hauteville**
**F-75010 Paris(FR)**

(54) **Ensemble d'alimentation électrique notamment pour véhicule automobile et machine électrique tournante pour un tel ensemble.**

(57) L'ensemble d'alimentation électrique (E) comprend une machine électrique tournante (1) destinée à être entraînée par un moteur afin de fournir de l'énergie électrique à une batterie et/ou à différents organes utilisateurs, et des moyens de redressement (R) combinés avec la machine pour établir du courant continu. La machine (1) est choisie de manière telle que, lorsqu'elle est entraînée par le moteur tournant au ralenti, la tension aux bornes (A, B, C) de la machine est insuffisante pour assurer une charge de la batterie; l'ensemble comprend des moyens (S) pour permettre d'établir périodiquement une surtension aux bornes (A, B, C) de la machine, et un courant de charge de la batterie.

FIG. 1

EP 0 251 916 A1

1

ENSEMBLE D'ALIMENTATION ELECTRIQUE,NOTAMMENT POUR VEHICULE AUTOMOBILE ET MACHINE ELECTRIQUE.TOURNANTE POUR UN TEL ENSEMBLE

L'invention est relative à un ensemble d'alimentation électrique, notamment pour véhicule automobile,ensemble du genre de ceux qui comprennent une machine électrique tournante destinée à être entraînée par un moteur ---------- afin de fournir de l'énergie électrique à une batterie et/ou à différents organes utilisateurs, et des moyens de redressement, combinés avec la machine tournante pour établir du courant continu. ------------------------------------------------------------

On sait que l'utilisation d'alternateurs à bord des automobiles s'est généralisée aux dépens des dynamos car les alternateurs s'adaptent mieux aux variations de régime du moteur qui les entraîne.

En effet, lorsque le moteur du véhicule tourne au ralenti, pour que le générateur électrique entraîné par le moteur puisse débiter du courant, il faut que ce générateur soit entraîné à une vitesse supérieure à celle du ralenti. On prévoit donc, entre le moteur du véhicule et le générateur électrique, des moyens de transmission qui introduisent un rapport multiplicateur, qui est actuellement de l'ordre de 2 ou 2,2 ou légèrement supérieur.

------------------------------------------------------------

Toutefois, l'introduction de ce rapport de multiplication crée des difficultés lorsque le moteur du véhicule tourne à son régime maximum car, alors, le générateur électrique peut être entraîné à des vitesses trop élevées. A titre d'exemple numérique non limitatif, si le régime maximum du moteur du véhicule est de l'ordre de 6000 tours/minute, le générateur électrique se trouve alors entraîné à une vitesse de l'ordre de 12000 tours/minute pour un rapport de transmission de 2.

Une telle vitesse de rotation n'est plus raisonnablement compatible avec les machines à collecteur et balais (dynamo) mais reste par contre relativement bien supportée par

2

les alternateurs qui sont munis de bagues lisses. ------------

--------------------------------------------------

--------------------------------------------------

Il n'en demeure pas moins que les vitesses de rotation élevées auxquelles sont soumis les générateurs électriques, lorsque le moteur est à son régime maximum, du fait du rapport de multiplication, constituent une difficulté et cela d'autant plus que la tendance est à augmenter le rapport de multiplication pour que la machine électrique tournante fournisse suffisamment de courant lorsque le moteur tourne au ralenti.

Il convient de rappeler que la force ------------ électromotrice (f.e.m.) d'un alternateur est à peu près proportionnelle à sa vitesse de rotation.

Comme on souhaite que l'alternateur débite du courant au ralenti, il faut que cet alternateur génère, au ralenti, une tension crête au moins égale, et de préférence supérieure à la tension de la batterie pour que ledit alternateur soit capable de débiter déjà un courant appréciable, notamment pour recharger la batterie. A titre d'exemple numérique, non limitatif, destiné à fixer les idées, partant d'un réseau de bord et d'une batterie dont la tension est de 14 volts, pour une vitesse de ralenti d'environ 600 tours/minute, l'alternateur tournera, dans le cas d'un rapport de multiplication égal à 2, à une vitesse d'environ 1200 tours/minute; pour que l'alternateur puisse déjà débiter un courant appréciable, de l'ordre de 5A à 10A, à cette vitesse de rotation, il faudra que la tension crête de phase de l'alternateur soit de l'ordre de 20 volts à vide, si la batterie n'est pas branchée. Dans ces conditions, à plein régime du moteur, c'est-à-dire à environ 6000 tours/minute, soit 12000 tours/minute pour l'alternateur, la force électromotrice de ce dernier atteint une valeur d'environ 200 volts, relativement élevée, qui entraîne des courants débités importants et qui peut nécessiter des composants électroniques relativement coûteux.

3

Dans le cas fréquent actuellement d'alternateurs à courant d'excitation, on peut moduler cette force électro-motrice, et la réduire à plein régime du moteur, en réduisant le courant d'excitation envoyé dans l'inducteur de l'alternateur, c'est-à-dire dans le rotor.

Si la demande en courant est forte, on peut amener le courant d'excitation vers la valeur maximale, la force électromotrice élevée permettant de débiter des courants importants.

Si la demande en courant est faible, on réduit le courant d'excitation et donc la force électromotrice et le courant débité par l'alternateur.

Toutefois, dans le cas d'alternateurs à aimants permanents (inducteur constitué par de tels aimants), il n'est pas possible de moduler l'excitation de l'alternateur. Comme on souhaite que le courant débité ne soit pas toujours maximum, on est amené à réduire l'intensité de ce courant par découpage, notamment par un dispositif hacheur séparé placé en série avec l'alternateur et le pont redresseur.

Mais avec les alternateurs à aimants permanents, si le découpage du courant permet de limiter l'intensité débitée par l'alternateur, les problèmes de tension subsistent puisque l'excitation de l'alternateur, assurée par les aimants permanents, reste maximale.

Il apparaît donc que la nécessité de faire tourner relativement vite l'alternateur, lorsque le moteur est au ralenti, pour lui permettre de débiter une intensité suffisante de courant, crée de sérieuses difficultés, au niveau des composants électriques et électroniques, et au niveau du fonctionnement, lorsque le moteur tourne à plein régime, quel que soit le type d'alternateur. Ce peut être le cas également des machines électriques tournantes du type dynamo.

L'invention a pour but, en particulier, de fournir un ensemble d'alimentation électrique , pour véhicule automobile, comprenant une machine électrique tournante génératrice, qui ne présente plus, ou à un degré moindre, les inconvénients évoqués ci-dessus.

4

On sait, par ailleurs, que pour des raisons d'économie d'énergie, on envisage d'installer, sur les véhicules qui circulent beaucoup en ville, des systèmes dits "arrêt-marche" qui permettent d'arrêter le moteur à combustion interne à chaque arrêt du véhicule, par exemple à un feu de croisement ou dans un embouteillage, et de redémarrer automatiquement le moteur à combustion interne lorsque le conducteur réappuie sur la pédale d'accélérateur.

Pour une telle application, on ne peut raisonnablement envisager d'utiliser le démarreur classique du véhicule. Un tel démarreur est prévu surpuissant pour les démarrages difficiles à froid, et une sollicitation répétée, en raison des nombreux arrêts du véhicule lors d'une circulation en ville, d'une part conduirait à une consommation de courant électrique excessive alors que le démarrage d'un moteur chaud est normalement facile et, d'autre part, à une diminution considérable de la durée de vie du démarreur.

. On a donc pensé à utiliser un volant d'inertie pour relancer le moteur à essence et le faire redémarrer, dans un tel système "arrêt-marche"; le maintien en rotation du volant d'inertie, lorsque le moteur à combustion interne est arrêté, peut être assuré par la machine électrique tournante génératrice utilisée alors en moteur électrique. Dans le cas d'un alternateur, le pont redresseur de l'alternateur se double d'éléments commandables permettant d'assurer la fonction moteur pour la création d'un champ tournant dans le stator, selon la technique des moteurs dits à "commutation électronique".

Lorsque la machine électrique tournante, notamment l'alternateur, est utilisée en moteur électrique, dans un tel système "arrêt-marche", l'énergie électrique est fournie, pour le fonctionnement en moteur, par la batterie du véhicule. Pour que l'alternateur, fonctionnant en moteur électrique, puisse tourner à une vitesse suffisante, il faut que la force contre-électromotrice du moteur électrique soit sensiblement inférieure, pour la vitesse de rotation souhaitée, à la tension de la batterie.

5

Or, la force contre-électromotrice de l'alternateur, ou plus généralement de la machine électrique tournante fonctionnant en moteur électrique a une valeur absolue égale à celle de la force électromotrice de l'alternateur ou de la machine fonctionnant en générateur de courant.

Dans le cas d'un système "arrêt-marche", on se trouve en présence d'une difficulté liée à celle exposée précédemment à propos du fonctionnement de l'alternateur lorsque le moteur à combustion interne tourne au ralenti.

En effet, si la force électromotrice de l'alternateur, fonctionnant en générateur, est suffisamment forte lorsque le moteur à combustion interne tourne au ralenti, la force contre-électromotrice de l'alternateur fonctionnant en moteur électrique deviendra un obstacle à l'entrée du courant provenant de la batterie et il ne sera pas possible de faire tourner suffisamment vite ce moteur électrique à partir de la tension normale du réseau de bord et de la batterie. Il faudra éventuellement élever cette tension par un convertisseur, ce qui entraîne des frais supplémentaires et complique l'installation.

Pour préciser ces difficultés dans le cas d'un système "arrêt-marche" on peut donner les exemples numériques suivants, non limitatifs.

Un système "arrêt-marche" sacrifie la recharge de la batterie au ralenti ; en pratique, on retient le fonctionnement suivant, avec un rapport de multiplication de 2,2 pour la vitesse de rotation de la machine électrique par rapport à celle du moteur du véhicule :

- libération, par débrayage, du volant d'inertie, destiné à redémarrer le moteur du véhicule, de celui calé sur le vilebrequin au-dessous de 2000 tours/minute pour le moteur (4400 tours/minute au niveau de l'alternateur), ainsi qu'en présence de toute décélération même à une vitesse plus élevée du moteur du véhicule ;

- si la vitesse de rotation du volant devient inférieure à 1800 tours/minute, on relance le volant jusqu'à 2200 tours/

6

minute en faisant fonctionner l'alternateur en moteur électrique. La liaison volant-alternateur peut être permanente ou débrayable, mais de toute façon en phase de volant libre en réserve d'énergie, l'alternateur ne fournit aucun courant à l'installation électrique du véhicule;

- au cours des arrêts du véhicule, on vérifie la tension de la batterie ; si cette tension est trop basse, on remet en route le moteur du véhicule pour recharger la batterie avec l'alternateur. On opère de même si des consommateurs importants d'énergie électrique sont mis en service.

On voit que le système "arrêt-marche" rend encore plus critique le problème du choix de la valeur de la force électromotrice de l'alternateur, ou plus généralement de la machine électrique tournante génératrice, déjà atteinte au ralenti du moteur du véhicule, et de la proportionnalité de cette force électromotrice en fonction de la vitesse de rotation. Avec un alternateur dont la force électromotrice est suffisante au ralenti du moteur (environ 600 tours/minute) pour assurer une charge de la batterie de 14 volts, il faudra disposer d'une tension d'environ 60 volts pour faire tourner l'alternateur (fonctionnant en moteur) à une vitesse de l'ordre de 4000 tours/minute correspondant sensiblement à la vitesse de 2000 tours/minute souhaitée pour le volant d'inertie destiné à redémarrer le moteur.

L'invention a également pour but de fournir un ensemble d'alimentation électrique, pour véhicule automobile, comprenant une machine électrique tournante génératrice, notamment un alternateur, qui permette, dans le cas où la génératrice serait utilisée en moteur électrique, de faire tourner à une vitesse suffisante ce moteur électrique à l'aide de la tension de la batterie sans nécessiter de circuit élévateur de tension.

Selon l'invention, un ensemble d'alimentation électrique pour véhicule automobile, du genre défini précédemment, est caractérisé par le fait que la machine électrique est choisie de manière telle que, lorsqu'elle est entraînée par le moteur ---- ---------tournant au ralenti, la tension aux bornes de la machine électrique tournante est insuffisante pour assurer une charge de la batterie, et qu'il comprend des moyens pour permettre d'établir périodiquement une surtension aux bornes de la machine électrique tournante, et un courant de charge de la batterie. Généralement, cette machine est constituée par un alternateur.

L'invention consiste donc à rendre la machine électrique tournante capable de fournir du courant à la batterie, même si sa force électromotrice est inférieure à la tension de la batterie et du réseau de bord.

On peut ainsi choisir une machine, notamment un alternateur apparemment sous-volté lorsqu'il est entraîné au régime du ralenti du moteur du véhicule ; en conséquence :

- pour le fonctionnement en alternateur simple, la force électromotrice, -----aux grandes vitesses de rotation correspondant au plein régime du moteur du véhicule, se trouvera réduite et sera d'autant moins gênante, spécialement s'il s'agit d'un alternateur à aimants permanents ;

- dans le cas d'un système "marche-arrêt" faisant intervenir le fonctionnement réversible alternateur-moteur, on pourra faire tourner l'alternateur en moteur électrique, à partir de la tension du réseau de bord, à une vitesse suffisante sans être gêné par une force contre-électromotrice trop importante.

De préférence, les moyens pour permettre d'établir une surtension aux bornes de l'alternateur et pour faire débiter un courant vers la batterie comprennent des interrupteurs commandés, disposés d'un côté du pont redresseur, et des moyens de commande pour provoquer une coupure par ces interrupteurs, en particulier lorsque le moteur tourne au ralenti, de manière à engendrer là surtension aux bornes des enroulements successifs de l'alternateur.

Avantageusement, pour la production de la surtension les interrupteurs sont commandés en parallèle.

Ces interrupteurs peuvent être constitués par des semi-conducteurs, notamment des transistors MOS.

La fréquence des coupures sera déterminée en rela-

8

tion avec les enroulements de la machine ; comme dans les alimentations à découpage, il y a intérêt à ce qu'elle soit la plus haute possible. Cette fréquence de coupure est choisie supérieure à la fréquence des ondes générées par la machine, notamment de l'ordre de 8 KHz ou plus.

L'ensemble d'alimentation électrique peut comporter des moyens permettant d'imbriquer les créneaux de courant délivrés par les enroulements successifs des phases de l'alternateur, en vue de réaliser automatiquement un lissage du courant fourni à la batterie et/ou au réseau de bord.

Pour la réalisation d'un tel lissage, par imbrication des créneaux de courant, on prévoit avantageusement, dans l'ensemble d'alimentation électrique, un alternateur à quatre enroulements de phase disposés en étoile.

L'invention concerne également une machine électrique tournante pour ensemble d'alimentation électrique tel que défini précédemment.

L'invention consiste, mises à part les dispositions exposées ci-dessus, en un certain nombre d'autres dispositions dont il sera plus explicitement question ci-après à propos de modes de réalisation particuliers décrits avec référence aux dessins ci-annexés, mais qui ne sont nullement limitatifs.

La figure 1, de ces dessins, est un schéma d'un ensemble d'alimentation électrique, conforme à l'invention, comportant un alternateur triphasé.

La figure 2 représente le signal de tension, porté en ordonnée, en fonction du temps, porté en abscisse, qui peut être observé aux bornes d'une phase de l'alternateur, lorsque le moteur du véhicule entraînant l'alternateur tourne au ralenti.

La figure 3 est un diagramme représentant le courant fourni à la batterie par l'alternateur lorsque le moteur tourne au ralenti.

La figure 4 est un schéma d'un montage destiné à un alternateur triphasé à inducteur équipé d'aimants permanents.

La figure 5 est un schéma d'un détail de branchement pour limiter les surtensions.

La figure 6 est un diagramme illustrant une surtension aux bornes de l'alternateur lorsqu'une charge est brusquement débranchée.

La figure 7 est un diagramme illustrant la variation de la force électromotrice, portée en ordonnée, en fonction de la vitesse de rotation pour un alternateur classique.

La figure 8 est un diagramme représentant la variation de l'intensité débitée par l'alternateur de l'ensemble d'alimentation conforme à l'invention en fonction de la vitesse de rotation, portée en abscisse.

Les figures 9 à 12 sont des schémas d'autres réalisations possibles avec un alternateur triphasé.

La figure 13 est un schéma d'une variante de réalisation de l'ensemble d'alimentation, selon l'invention, comportant un alternateur à quatre phases en étoile.

La figure 14 est un diagramme des signaux de commande de la coupure des interrupteurs de groupes de deux phases opposées de l'alternateur de l'ensemble de la figure 13.

La figure 15 est un schéma simplifié destiné à faire apparaître essentiellement les tensions, dans l'ensemble d'alimentation de la figure 13.

La figure 16 est un diagramme illustrant l'imbrication des créneaux de courant produits par l'ensemble de la figure 13.

La figure 17 est un schéma simplifié, semblable à celui de la figure 15, correspondant à une autre situation des valeurs instantanées des quatre phases de l'alternateur.

La figure 18 illustre l'imbrication des créneaux de courant obtenus dans le cas de la figure 17.

Les figures 19 et 20 sont des schémas d'autres réalisations possibles avec un alternateur tétraphasé.

La figure 21, enfin, est un schéma d'un ensemble d'alimentation comportant, comme machine électrique tournante, une dynamo.

10

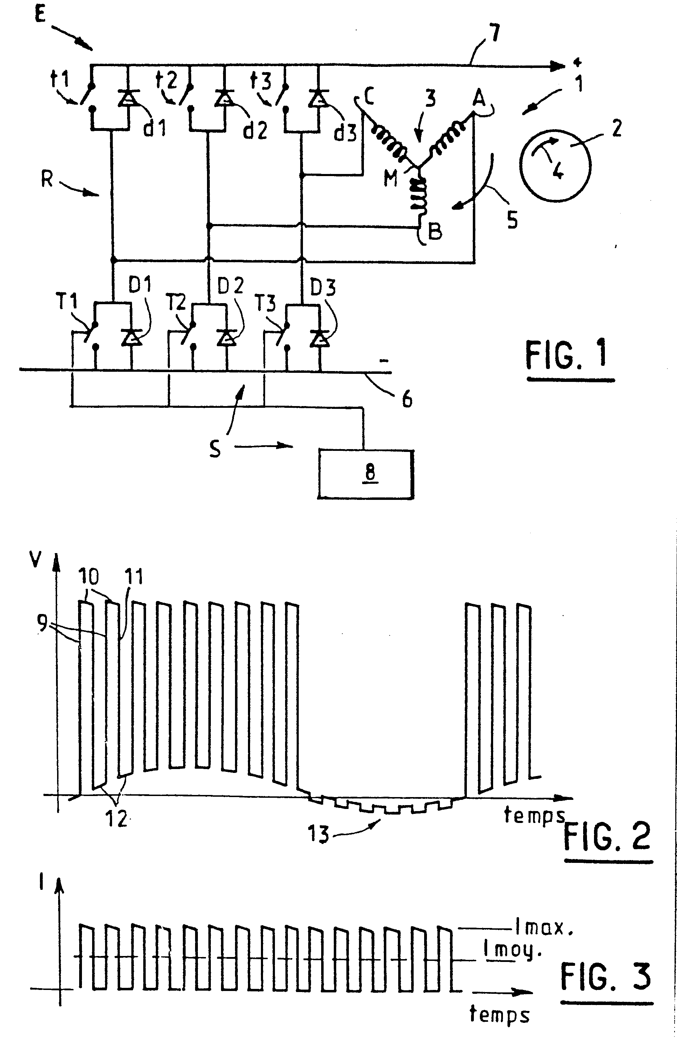

En se reportant à la figure 1 des dessins, on peut voir un ensemble E d'alimentation électrique pour un véhicule automobile, cet ensemble comprenant un alternateur 1 destiné à être entraîné par le moteur du véhicule afin de fournir de l'énergie électrique à une batterie (non représentée) et/ou à différents organes utilisateurs (non représentés). L'alternateur 1 comprend un inducteur 2 constituant le rotor et un stator 3 à plusieurs enroulements. Dans l'exemple de la figure 1, l'alternateur est du type triphasé et son stator comporte trois enroulements branchés en étoile. Les bornes de ces trois enroulements de phase ont été désignées par les lettres A, B et C, tandis que le point commun est désigné par M.

Le rotor 2 de l'alternateur est entraîné à partir du moteur du véhicule par l'intermédiaire de moyens de transmission introduisant un rapport de multiplication, par exemple de l'ordre de deux, pour que ce rotor tourne à une vitesse suffisante lorsque le moteur du véhicule est au ralenti. Le rotor 2 peut être du type bobiné et à courant d'excitation qui peut être modulé en fonction des besoins, notamment par un régulateur. Selon une autre possibilité, le rotor 2 peut être du type à aimants permanents. Le sens de rotation du rotor 2, selon le schéma de la figure 1, est le sens des aiguilles d'une montre indiqué par la flèche 4.

La rotation du rotor 2 induit, dans les enroulements du stator 3, des tensions alternatives, sinusoïdales, déphasées de 120°. La succession des phases est supposée avoir lieu, selon le schéma de la figure 1, suivant le sens des aiguilles d'une montre représenté par la flèche 5.

L'ensemble E comprend un pont redresseur R propre à établir du courant continu à partir du courant alternatif provenant de l'alternateur 1. Ce pont redresseur comporte, d'une manière classique, six diodes, à savoir deux diodes associées à chaque enroulement du stator 3 ; ainsi, à l'enroulement admettant pour borne A sont associées les deux diodes D1 et d1. L'anode de la diode D1 est reliée à la ligne

11

électrique 6 branchée sur la borne - de la batterie, tandis que la cathode de D1 est reliée à la borne A ainsi qu'à l'anode de la diode d1. La cathode de la diode d1 est reliée à une ligne électrique 7 branchée sur la borne + de la batterie.

De la même manière, les diodes D2, d2 et D3, d3 sont associées aux bornes B et C.

Selon l'invention, l'alternateur 1 est choisi de manière telle que lorsqu'il est entraîné par le moteur du véhicule tournant au ralenti, la tension de phase aux bornes de l'alternateur 1 est insuffisante pour assurer une charge de la batterie. Pratiquement, la tension crête de phase, au ralenti, est inférieure à la tension de la batterie ; cette tension est fréquemment de 14 volts dans les véhicules actuels.

L'ensemble E comprend, en outre, des moyens S pour permettre d'établir périodiquement une surtension aux bornes A, B, C de l'alternateur et un courant de charge de la batterie, en dépit de la tension normalement insuffisante de cet alternateur au ralenti du moteur.

Les moyens S comprennent des interrupteurs commandés T1, T2, T3 disposés d'un côté du pont redresseur, à savoir du côté relié à la ligne 6, et des moyens de commande 8 pour provoquer des coupures répétées par ces interrupteurs, lorsque le moteur du véhicule tourne au ralenti, de manière à engendrer une surtension aux bornes A, B et C des enroulements successifs de l'alternateur.

Les interrupteurs T1, T2, T3 sont branchés en parallèle aux bornes des diodes D1, D2, D3 respectives. Ces interrupteurs peuvent être constitués par des transistors MOS ou tout autre semiconducteur. Il est à noter que sur le schéma de la figure 1, on a représenté séparément l'interrupteur et la diode associée ; dans la pratique, si c'est un transistor MOS, il peut jouer à la fois le rôle d'interrupteur et de diode, de telle sorte qu'un seul composant électronique, à savoir le transistor, est branché entre la ligne 6 et la borne associée de l'alternateur.

Les moyens de commande 8 sont constitués par un générateur de signaux dont la sortie est reliée à la grille de chaque transistor MOS T1, T2, T3. Ces transistors ou interrupteurs sont commandés en parallèle, c'est-à-dire qu'ils sont fermés ou ouverts simultanément. L'électrode constituant le drain de chaque transistor est reliée à la borne associée de l'alternateur tandis que l'autre électrode constituant la source est reliée à la ligne 6.

Dans le cas où l'alternateur 1 est destiné à fonctionner uniquement comme générateur de courant électrique, les diodes d1, d2, d3 sont utilisées seules.

Par contre, dans le cas où l'alternateur 1 est destiné à être réversible de manière à pouvoir fonctionner en moteur électrique, des interrupteurs commandés, également formés par des transistor MOS t1, t2, t3 sont branchés de l'autre côté du pont redresseur en parallèle aux bornes des diodes d1, d2, d3. Comme dans un moteur à commutation électronique, par une commande judicieuse des interrupteurs T1, T2, T3 et t1, t2, t3, on peut produire à l'aide des enroulements du stator 3 un champ magnétique tournant qui crée un couple d'entraînement du rotor. Comme expliqué précédemment, un même transistor MOS peut jouer à la fois le rôle d'interrupteur t1 et de diode d1.

La fréquence des coupures commandées par les signaux provenant des moyens 8 est de préférence élevée de l'ordre de 8KHz ou plus. Le rapport cyclique peut être égal à 50 %, c'est-à-dire que la durée des intervalles pendant lesquels les transistors T1, T2, T3 sont conducteurs est égale à la durée des intervalles pendant lesquels ces mêmes transistors sont bloqués (interrupteurs ouverts). Selon les machines, d'autres valeurs de rapport cyclique peuvent être utilisées. Ce rapport cyclique peut même évoluer avec la vitesse pour permettre d'obtenir le rendement optimum.

Les moyens de commande 8 sont avantageusement prévus pour interrompre le découpage et maintenir les transistors

T1, T2, T3 ouverts c'est-à-dire bloqués, lorsque la vitesse de rotation du moteur du véhicule atteint une valeur telle que la tension produite par l'alternateur 1 devient suffisante pour alimenter normalement la batterie.

On envisage, maintenant, le cas d'un alternateur à aimants permanents. Un tel alternateur peut présenter, en partie grâce à l'apparition de nouveaux types d'aimants très puissants, des performances supérieures à celles d'une machine à excitation, à taille égale.

Le problème de la régulation n'est pas aisé par voie électrique puisque le flux, produit par les aimants permanents, est toujours à son maximum. L'électronique de contrôle du courant ne peut être que sur le circuit de puissance lui-même, contrôlant les courants débités par l'alternateur, et avec les tensions à vide générées par la machine.

La présente invention permet, par un compromis, de faciliter la résolution de ce problème.

Aux basses vitesses, par un découpage, on va améliorer les performances d'une machine qui aura donc encore été voulue sous-voltée.

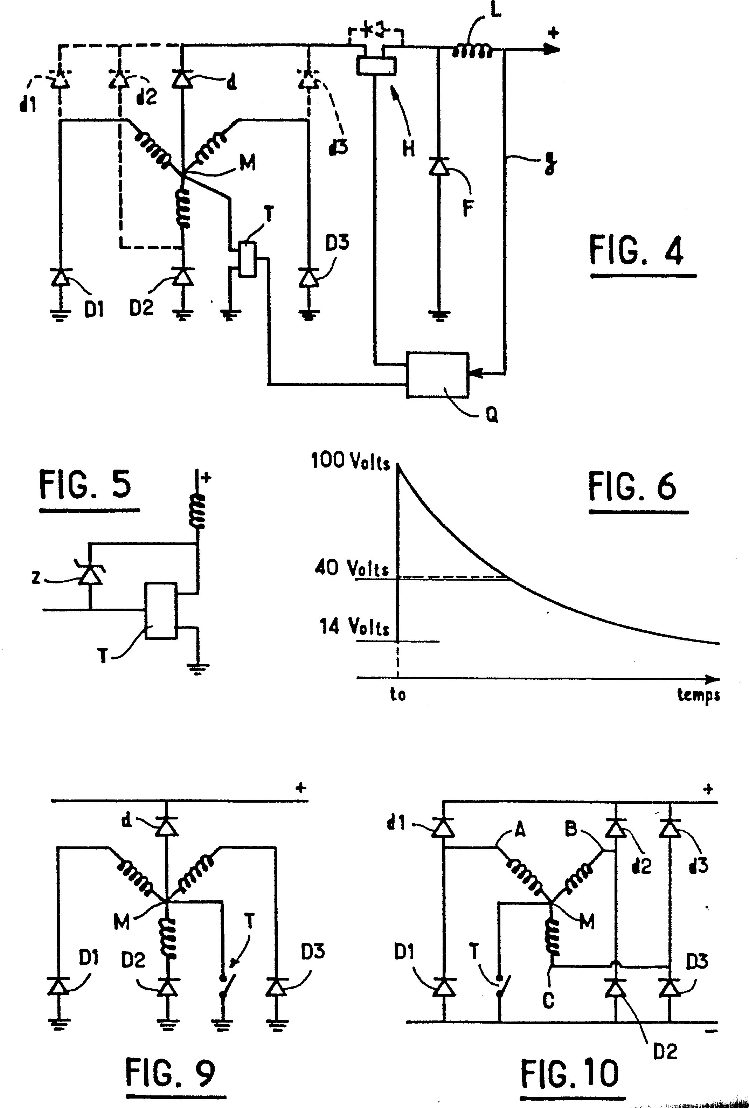

Aux moyennes et hautes vitesses, on procédera à un découpage autre du courant débité avec self de stockage L (figure 4) et diode de roue libre F (figure 4) selon une technique connue. Il est à noter que cette self assurera le lissage des courants découpés de basse vitesse.

On peut donc avoir, à titre indicatif et non limitatif, le schéma de la figure 4 pour un alternateur triphasé. Le découpage, à basse vitesse, est assuré par un seul interrupteur T branché entre le point milieu M et la masse, cet interrupteur T étant commandé par un ensemble incorporé dans le régulateur Q. Pour un redressement d'une seule alternance, seul le point M est relié, par l'intermédiaire d'une diode d, à la ligne +. L'anode de la diode d est reliée au point M, tandis que la cathode est reliée à la ligne +. Pour un redressement double alternance, on utiliserait les diodes

14

d1, d2, d3, représentées en pointillé, et semblables à celles de la figure 1.; la diode d serait alors supprimée. Dans tous les cas, les diodes D1, D2, D3, semblables à celles de la figure 1 et branchées de la même manière, sont utilisées.

Le découpage aux moyennes et hautes vitesses est assuré par un hacheur H monté en série sur la ligne + et commandé par le régulateur Q . La self de stockage L est branchée en série en aval du hacheur H tandis que la diode de roue libre F est reliée, par sa cathode, à un point situé entre la self L et le hacheur H, et, par son anode, à la masse.

La tension en aval de la self L est renvoyée sur le régulateur Q par un branchement g.

Le fonctionnement de l'ensemble E de la figure 1 est le suivant.

Pour les vitesses faibles de rotation du moteur de véhicule, notamment lorsque ce moteur tourne au ralenti, les forces électromotrices sinusoïdales générées par l'alternateur 1, bien que trop faibles pour faire circuler un courant de charge de la batterie à travers les diodes de redressement, existent et peuvent faire circuler un courant à travers les transistors T1,T2, T3, lorsque ces derniers sont conducteurs.

On rappelle que les transistors sont commandés en commutation à une fréquence relativement élevée par les moyens 8.

Lorsque les transistors T1, T2, T3 sont conducteurs, ils établissent un court-circuit dans les enroulements correspondants du stator 3. L'apparition d'une force électromotrice, même faible, aux bornes de ces enroulements engendre un courant de court-circuit dans les enroulements qui constituent des selfs. A la coupure de commutation, provoquée par le blocage des transistors T1, T2, T3, une surtension prend naissance dans les enroulements et provoque la conduction des diodes d1, d2, ou d3. L'énergie électrique stockée dans les enroulements s'écoule vers la batterie sous forme d'un courant de charge.

15

Les transistors T1, T2, T3 jouent successivement leur rôle de découpeur, au fur et à mesure de l'évolution de la tension sur les bornes A, B et C du stator 3. Les diodes inverses D1, D2, D3 assurent, par ailleurs, la conduction pour l'autre extrémité du ou des enroulements.

La figure 2 illustre la tension sur une borne d'un des enroulements du stator 3. Pour chaque alternance positive de l'onde sinusoïdale sur la borne considérée, l'ouverture du circuit électrique correspondant provoquée par le blocage des transistors, engendre une surtension correspondant à un front montant 9 d'un créneau. Ce créneau de tension est écrêté à une valeur légèrement supérieure à la tension de la batterie. La tension diminue légèrement, ce qui correspond au segment 10 de la figure 2, pendant la durée d'ouverture du transistor associé à l'enroulement considéré. Lorsque ce transistor devient conducteur à nouveau, la tension chute suivant le front descendant 11 jusqu'à la valeur de la force électromotrice de l'alternateur 1 correspondant à la vitesse de rotation du moment. Pendant la phase où les transistors sont conducteurs, l'enroulement considéré du stator stocke de l'énergie qu'il débitera dans la batterie lors de la prochaine ouverture des transistors ; cette phase de stockage correspond à des segments tels que 12 sur la figure 2. Pour un rapport cyclique égal à 50 % des signaux délivrés par les moyens 8, les segements 10 et 12 correspondent à une même durée, c'est-à-dire à la même composante suivant l'axe des abscisses de la figure 2, qui est l'axe du temps.

Lors de l'alternance négative 13, pour laquelle la borne considérée A, B ou C, se trouve à une tension inférieure à celle du point milieu M, le découpage introduit par les transistors fait apparaître des créneaux de faible amplitude comme représenté sur la figure 2, dus à la conduction de la diode inverse.

Pour chaque borne A, B ou C, le signal de tension est le même que celui de la figure 2, avec un décalage, dans

16

le temps, correspondant à une rotation de 120° du rotor 2, d'une borne à l'autre.

Il est connu que les alternateurs, lorsque l'on débranche brusquement une charge sur laquelle il débitait, génèrent, avant de retrouver un nouvel équilibre, une surtension d'une fraction de seconde pouvant atteindre près de dix fois la tension nominale. Cette surtension est illustrée par le diagramme de la figure 6 où le temps a été porté en abscisse tandis que la tension aux bornes de l'alternateur est portée en ordonnée. Au temps $t_0$ une charge sur laquelle l'alternateur débitait est débranchée. La tension aux bornes de l'alternateur peut passer brusquement de la valeur nominale par exemple 14 volts à une valeur de l'ordre de 100 volts. Tous les équipements électriques ou électroniques du véhicule automobile risquent de souffrir d'une telle surtension que l'on va chercher à étouffer à son origine, c'est-à-dire sur l'alternateur lui-même.

Ceci peut être réalisé à l'aide d'une grosse diode Zener écrêtant la surtension par exemple à une valeur de l'ordre de 40 volts comme illustré par le palier en tirets de la figure 6, ce qui devient acceptable pour les autres équipements électriques et électroniques du véhicule.

Les diodes du pont redresseur R peuvent devenir elles-mêmes des Zener et jouer ce rôle.

Dans le cas où on utilise des transistors, notamment des transistors MOS de puissance, prévus pour supporter les courants maxima de la machine, on peut leur faire jouer aussi le rôle de grosses Zener en bouclant le transistor T, comme représenté sur la figure 5, par une petite diode Zener z dont l'anode est reliée à la grille du transistor T tandis que la cathode est reliée au drain de ce transistor.

La figure 3 illustre le courant de charge de la batterie obtenu avec l'ensemble E de l'invention, lorsque le moteur du véhicule tourne au ralenti et que les moyens interrupteurs T1, T2 et T3 sont mis en service. Les variations de

17

l'intensité du courant de charge de la batterie, portées en ordonnées, en fonction du temps, sont représentées par un signal en créneau passant d'une valeur I max. à la valeur nulle, en réponse au créneau de tension de la figure 2. Dans le cas considéré d'un rapport cyclique de 50 %, l'intensité maximale I max. est égale à 2I moyen puisque les intervalles pendant lesquels le courant est nul ont la même durée que ceux pendant lesquels le courant a la valeur I max.

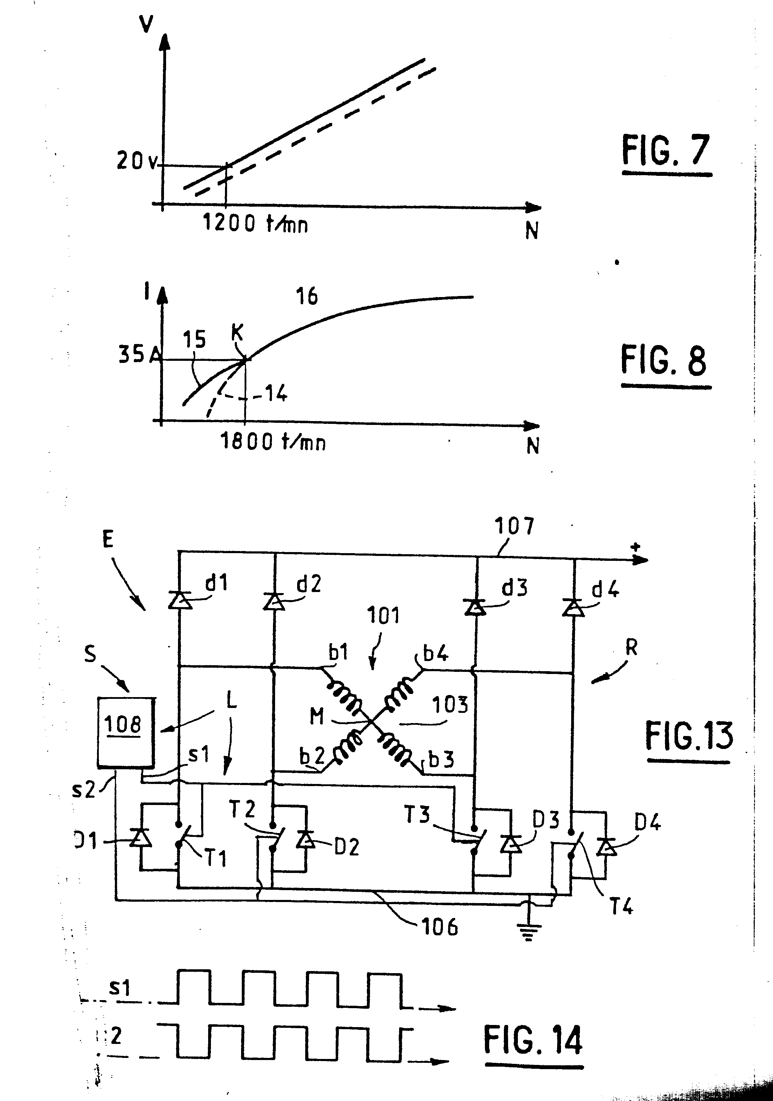

Le diagramme de la figure 7 illustre en trait plein la variation de la force électromotrice aux bornes d'un alternateur classique en fonction de la vitesse de rotation N portée en abscisse. La variation est représentée par un segment de droite, la force électromotrice étant proportionnelle à la vitesse de rotation. Dans un montage classique, pour une batterie de 14 volts, l'alternateur est agencé de manière à avoir au ralenti, correspondant par exemple à une vitesse de 1200 tours/minute de l'alternateur, une force électromotrice à vide de 20 volts. Dans un ensemble conforme à l'invention, la force électromotrice de l'alternateur, au ralenti, est inférieure à cette valeur ; la courbe représentant la variation de la force électromotrice de l'alternateur dans un ensemble conforme à l'invention correspond au segment de droite tracé en tirets sur la figure 7 , situé au-dessous du segment en trait plein. La solution de l'invention permet donc, à plein régime du moteur, de réduire la force électromotrice de l'alternateur.

Le diagramme de la figure 8 représente les variations de l'intensité I, portée en ordonnée, débitée par l'alternateur, en fonction de la vitesse de rotation N de cet alternateur. Pour les faibles vitesses de rotation de l'alternateur, par exemple les vitesses inférieures à une valeur de 1800 tours/minute, dans un alternateur classique, l'intensité débitée chute très rapidement, comme représenté par le segment de courbe 14 de la figure 8.

Par contre, dans un ensemble E conforme à l'inven-

18

tion, l'alternateur continue à débiter une intensité relativement élevée pour des vitesses de rotation inférieures à 1800 tours/minute, comme représenté par le segment de courbe en trait plein de la figure 8. A partir du point K, c'est-à-dire au-dessus de 1800 tours/minute, on retrouve la courbe classique correspondant à un fonctionnement habituel de l'alternateur 1 de la figure 1 sans intervention des moyens interrupteurs T1, T2, T3.

Pour diminuer le nombre de transistors découpeurs et le nombre de diodes, on peut se contenter de solutions simplifiées telles que celles illustrées par les schémas des figures 9 à 12.

La figure 9 illustre un redressement mono-alternance pour un alternateur triphasé dont les trois enroulements du stator sont représentés. Pratiquement, le schéma de la figure 9 correspond à celui de la figure 4 et les mêmes références sont utilisées pour désigner les éléments semblables ou jouant des rôles analogues, sans que leur description soit reprise.

Le schéma de la figure 10 correspond à un redressement bi-alternance avec un pont redresseur de six diodes, deux diodes étant associées à chaque enroulement de l'alternateur triphasé. Les diodes sont désignées par les mêmes références que sur la figure 1. Les trois enroulements sont branchés en étoile avec un point milieu M. Un seul interrupteur T est prévu comme dans le cas de la figure 9, cet interrupteur étant branché entre le point M et la ligne reliée à la borne - , ou à la masse.

Le schéma de la figure 11 correspond, pour un alternateur triphasé, à un redressement bi-alternance avec un pont redresseur de six diodes. Un seul moyen interrupteur T est prévu entre la ligne 7, reliée à la borne + et la masse. Une diode D'est montée sur la ligne 7, en aval du branchement de l'interrupteur T, l'anode de cette diode étant reliée à la sortie de l'alternateur tandis que la cathode est reliée à la borne + de la batterie non représentée.

Le schéma de la figure 11 permet d'obtenir un bon
rendement de la machine (redressement bi-alternance) avec un
seul découpeur ; il y a toutefois une chute de tension supplémentaire dans la diode D7. Pour éviter cet inconvénient,
on peut envisager le montage conforme au schéma de la figure
12.

L'alternateur triphasé, dont les enroulements du
stator sont branchés en étoile, est associé à un pont redresseur à six diodes comme dans le cas de la figure 11. Chaque
extrémité d'un enroulement du stator est reliée à l'anode
d'une diode correspondante dA, dB, dC. Les cathodes de ces
trois diodes sont reliées ensemble. Un seul moyen interrupteur T est branché entre le point commun des cathodes et la
masse.

Le schéma de la figure 12 permet d'éviter la chute
de tension qui se produit dans la diode D7 du schéma de la
figure 11. Les diodes étant des composants moins chers que
les transistors, le montage de la figure 12, qui fait intervenir un nombre relativement élevé de diodes, reste plus économique que celui de la figure 1.

Il est à noter que les schémas que l'on vient de décrire
sont valables non seulement en montage étoile mais aussi en
montage triangle des enroulements. Ces exemples de montage
présentés en triphasé peuvent se généraliser à d'autres multiphasés.

Le schéma de la figure 13 illustre une variante de
réalisation selon laquelle l'ensemble E d'alimentation comporte des moyens L permettant d'imbriquer les créneaux de
courant délivrés par les enroulements successifs des phases
de l'alternateur pour établir un lissage du courant de
charge de la batterie.

L'alternateur 101 de l'ensemble E de la figure 13
comporte quatre enroulements de phase disposés en étoile.

20

Sur la figure 13, seuls les enroulements du stator 103 ont été représentés, sans que la schématisation du rotor, qui apparaît sur la figure 1, ait été reprise. Le stator comporte quatre bornes b1,b2,b3,b4.

Le pont redresseur R se compose de huit diodes à savoir D1...D4 et d1...d4.

Les diodes D1 et d1 sont associées à la borne b1. L'anode de la diode D1 est reliée à la ligne 106 branchée à la masse, elle-même reliée à la borne - de la batterie. L'anode de cette diode D1 est reliée à la borne b1. L'anode de la diode d1 est reliée à la borne b1 tandis que la cathode de la diode d1 est reliée à la ligne 107, elle-même reliée à la borne + de la batterie. Les autres diodes sont associées, de la même manière, aux autres bornes b2, b3 et b4.

Des interrupteurs commandés T1,T2,T3,T4 sont branchés en parallèle aux bornes des diodes D1...D4. Comme dans l'exemple de réalisation de la figure 1, ces interrupteurs sont avantageusement constitués par des transistors MOS qui peuvent jouer à la fois le rôle de l'interrupteur et de la diode, bien que ces deux éléments soient représentés de manière séparée sur la figure 13.

Les moyens 108 pour commander la coupure des circuits par les interrupteurs T1...T4 comportent deux sorties s1, s2 propres à délivrer des signaux décalés dans le temps comme représenté sur la figure 7. De préférence, ces signaux sont formés par des créneaux complémentaires, correspondant à un rapport cyclique de 50 %, les créneaux étant ainsi décalés d'une demi-période.

Les signaux provenant de la sortie s1 commandent, en parallèle, les interrupteurs T1, T3 correspondant à deux enroulements opposés du stator 103. Les signaux provenant de la sortie s2 commandent, en parallèle, les interrupteurs T2, T4 associés aux deux autres enroulements opposés du stator 103.

Comme pour l'exemple de réalisation de la figure 1,

21

les moyens interrupteeurs T1...T4 sont commandés à des fréquences élevées, notamment de 8 KHz ou plus, lorsque le moteur du véhicule tourne au ralenti de manière à provoquer des surtensions pour assurer l'alimentation de la batterie à partir de l'alternateur 101 qui a été choisi de telle sorte que sa force électromotrice, en fonctionnement normal, soit insuffisante au ralenti pour assurer une telle charge.

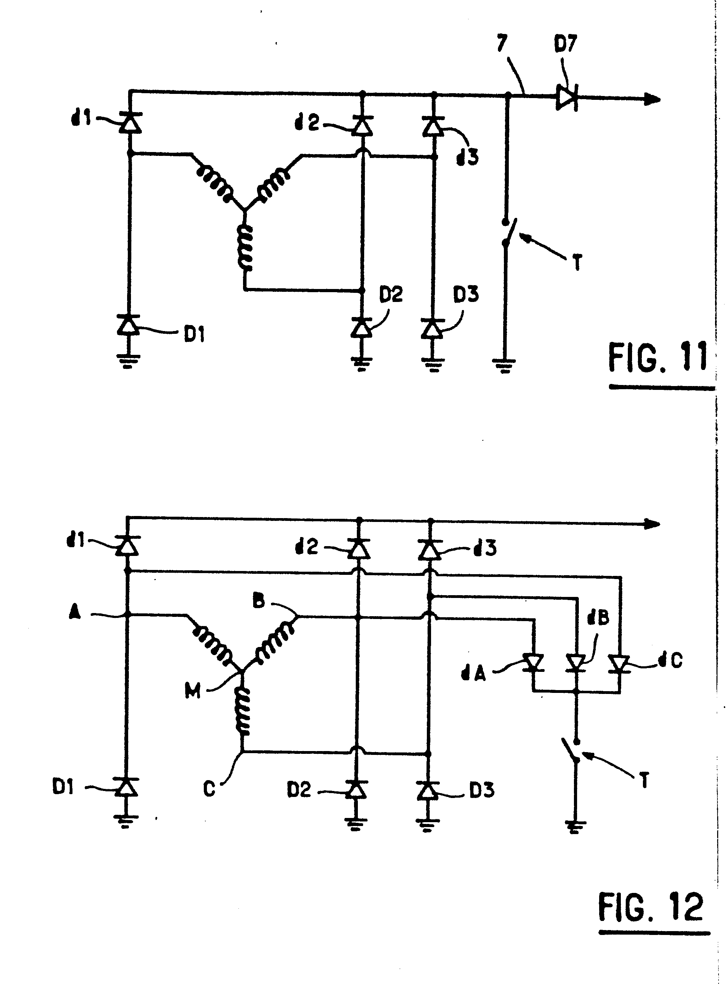

La figure 15 reprend, en partie, le schéma de la figure 13, mais sans montrer les quatre enroulements du stator, branchés de la même manière que sur la figure 13, et avec un minimum de chiffres ou lettres de référence.

Cette figure 15 illustre par des vecteurs U1, U2, U3 et U4 les tensions générées aux bornes du stator.

Selon le fonctionnement habituel des ponts de diodes et compte tenu de la disposition des vecteurs représentés sur cette figure, les diodes D2 et D3 conduiront quand les surtensions provoquées par T1 ou T4 feront conduire les diodes d1 et d4.

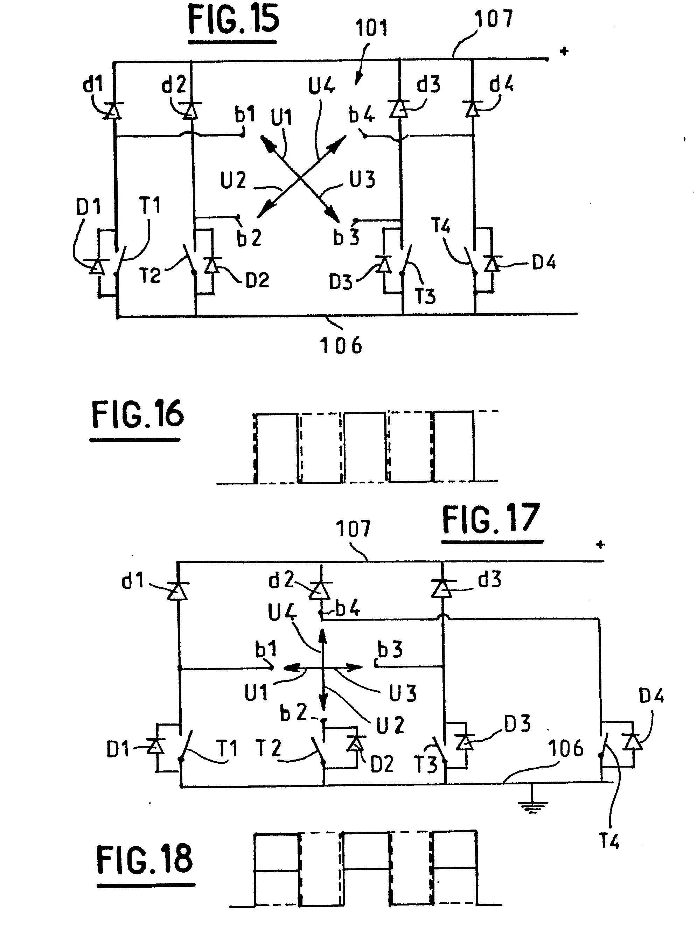

Si l'on a pris soin d'imbriquer à 50 % les surtensions de T1 et T4, on aura le courant représenté sur la figure 16. En trait plein, le courant provoqué par la surtension de b1, en pointillé celui provoqué par la surtension de b4.

On voit que l'intensité moyenne du courant fourni à la batterie est sensiblement constante et égale à l'intensité maximale d'un créneau fourni par un couple de deux enroulements opposés de l'alternateur 101.

Quand le rotor tourne, les vecteurs U1...U4 tournent et l'on a un peu après la situation de la figure 17.

La diode D2 est conductrice, T1 et T3, commandés simultanément, provoquent en b1 et b3 une surtension participant pour la moitié du courant représenté en trait plein sous la forme de deux créneaux superposés dans la figure 11.; tandis que T4 (en b4), qui bénéficie donc d'une tension plus élevée (par U4), crée à lui tout seul un courant équivalent aux deux autres additionnés, et imbriqué avec eux.

0251916

22

En résumé, T1, T3 sont commandés avec une phase de commutation et T2,T4 avec la phase complémentaire.

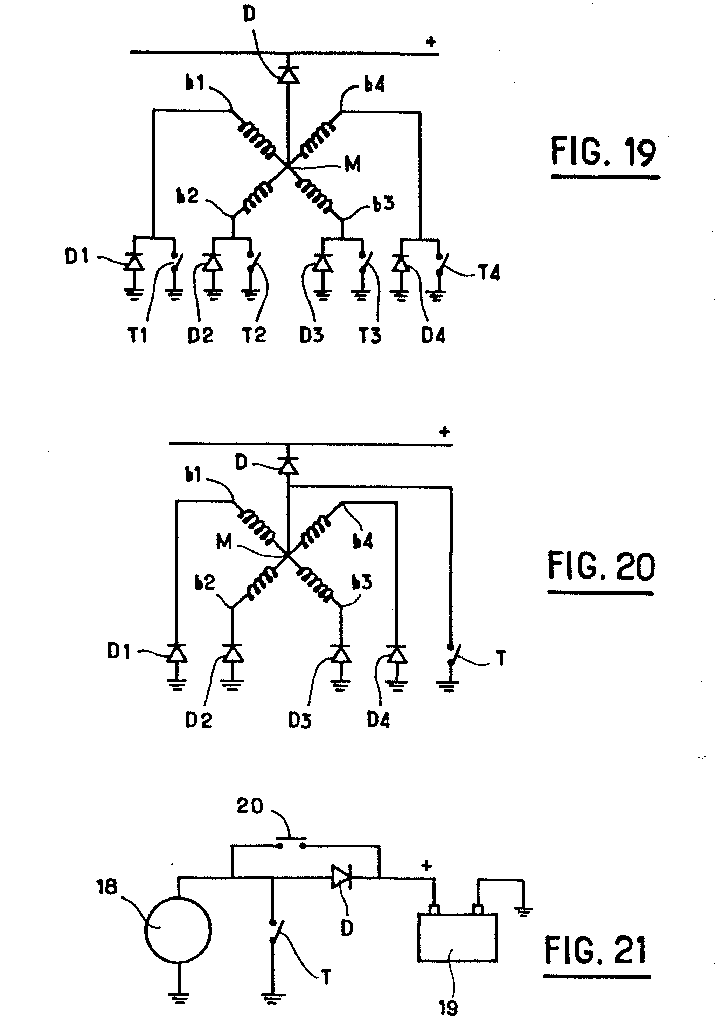

La figure 19 est un schéma illustrant une variante de montage d'un alternateur tétraphasé. On retrouve les diodes D1...D4 et les interrupteurs T1...T4 de la figure 13. Par contre, les diodes d1... d4 de ladite figure 13 sont supprimées et remplacées par une seule diode D dont l'anode est reliée au point milieu M et la cathode à la ligne +.

La figure 20 est un schéma illustrant une autre variante de montage d'un alternateur tétraphasé. Les interrupteurs T1...T4 de la figure 13 sont remplacés par un seul interrupteur T branché entre le point milieu M et la masse. On retrouve la diode D de la figure 19.

En résumé, l'ensemble d'alimentation électrique conforme à l'invention permet de faire débiter un alternateur même à vitesse de rotation très faible, alors que la force électromotrice de l'alternateur peut être inférieure à la tension à fournir. En conséquence, un tel ensemble d'alimentation permet de réduire les tensions générées par l'alternateur à très haute vitesse de rotation.

La solution de l'invention permet, en prenant une machine sous voltée, de concilier les impératifs du fonctionnement réversible alternateur-moteur pour des vitesses qui se recouvrent.

L'invention permet d'améliorer la puissance massique des alternateurs.

En effet, les alternateurs sur véhicule automobile sont déterminés pour assurer un certain débit de courant dans les conditions habituelles voire difficiles d'utilisation de la voiture.

Tel qu'il a été déjà décrit, le cas du ralenti ou des basses vitesses pour une conduite en ville spécialement en hiver (chauffage, lunette arrière etc...) et la nuit (lumières, feux de croisement, etc...), correspond au cas le plus difficile.

23

Cela amène à surdimensionner l'alternateur.

La présente invention renforçant beaucoup les performances dans ce domaine d'utilisation, doit permettre de revenir à une machine plus petite.

On a décrit, dans le cadre du système arrêt-marche, la machine réversible qui permet de traiter le problème avec l'aide d'un volant d'inertie.

Mais on peut songer aussi à une solution où l'alternateur, transformé momentanément en moteur, pourrait générer un couple suffisant pour relancer seul, sans aide inertielle, le moteur thermique. Le couple doit alors être nettement plus fort, mais les vitesses de rotation à atteindre en moteur sont plus basses. En fait, le problème de compatibilité de force contre électro-motrice disparaît dans ce cas. La plage moteur va de 0 à 1000 tours/minute et la plage alternateur va de 1200 à 12000 tours/minute ; elles ne se recouvrent donc pas. Mais le couple étant proportionnel au courant entrant dans le moteur, ce courant sera d'autant plus élevé pour les vitesses nécessaires au lancement du moteur thermique (vers 200, 300 tours/minute soit 400, 600 tours/minute pour la machine électrique).que les forces contre électromotrices seront faibles.

Ceci engage donc à créer une machine sous voltée mais qui sera réévaluée en alternateur aux régimes "ralenti" par le système de découpage de l'invention.

D'autres domaines d'applications de l'invention concernent les dynamos.

Au début de la description, on a expliqué pourquoi les alternateurs avaient remplacé les dynamos sur les automobiles.

Il n'en reste pas moins que les dynamos avaient aussi certains avantages, en particulier ceux de se lier beaucoup plus aisément à la batterie, que ce soit en générateur ou en moteur.

Pour en revenir au système arrêt-marche, on voit

24

que la dynamo résout plus simplement le problème, puisqu'en moteur, il suffit de la brancher sur la batterie, alors que l'alternateur nécessite une électronique de commutation; un système de découpage, tel que décrit dans l'invention, avec un seul transistor remonte les performances à bas régime qui étaient justement un des défauts des dynamos sur automobile.

La figure 21 est un schéma d'un ensemble d'alimentation selon l'invention comprenant une dynamo 18 dont une borne est reliée à la masse et l'autre borne est reliée par une diode D à la borne + de la batterie 19. L'anode de la diode D est reliée à la borne de la dynamo 18, tandis que la cathode de la diode D est reliée à la batterie. Un moyen interrupteur ou découpeur T est branché entre, d'une part, la borne de sortie de la dynamo 18 (et donc l'anode de D) et, d'autre part, la masse ; le moyen interrupteur T intervient aux basses vitesses de rotation comme expliqué précédemment.

Un contact 20 est monté dans un branchement en dérivation entre la borne de sortie de la dynamo 18 et la borne + de la batterie 19. Ce contact 20 est fermé, de manière à shunter la diode D, lorsque l'on souhaite faire fonctionner la dynamo en moteur.

Dans le cas d'une dynamo, on peut considérer que les moyens de redressement du courant sont formés par l'ensemble du collecteur et des balais.

Des utilisations de l'invention hors automobile sont possibles.

Les principes de cette invention, qui consistent, par découpage, à améliorer, pour une tension de sortie constante (charge, batterie), les performances basses vitesses des machines tournantes génératrices, peuvent s'appliquer à tous les cas où des variations importantes de régime sont inévitables.

On peut citer le cas des éoliennes où il devient possible de recharger les batteries même par vents faibles et, en général, les systèmes de charges basées sur des hélices ou similaires, mues par des fluides en fonction d'une vitesse
de déplacement : voiliers par exemple.

0251916

26

## REVENDICATIONS

1. Ensemble d'alimentation électrique, notamment pour véhicule automobile, comprenant une machine électrique tournante destinée à être entraînée par un moteur ----------- afin de fournir de l'énergie électrique à une batterie et/ou à différents organes utilisateurs, et des moyens de redressement, combinés avec la machine tournante pour établir du courant continu, caractérisé par le fait que la machine électrique tournante (1, 101, 18) est choisie de manière telle que, lorsqu'elle est entraînée par le moteur ---------- tournant au ralenti, la tension de phase aux bornes (A, B, C ; b1, b2, b3, b4) de la machine électrique tournante est insuffisante pour assurer une charge de la batterie, et qu'il comprend des moyens (S) pour permettre d'établir périodiquement une surtension aux bornes de la machine électrique tournante, et un courant de charge de la batterie.

2. Ensemble d'alimentation électrique selon la revendication 1, dans lequel la machine électrique tournante est formée par un alternateur , caractérisé par le fait que les moyens (S) pour permettre d'établir une surtension aux bornes de l'alternateur et pour faire débiter un courant vers la batterie comprennent des interrupteurs commandés (T1, T2, T3, T4;T) disposés du côté du pont redresseur (R), et des moyens de commande (8 ; 108) pour provoquer une coupure par ces interrupteurs, en particulier lorsque le moteur tourne au ralenti, de manière à engendrer la surtension aux bornes des enroulements successifs de l'alternateur.

3. Ensemble d'alimentation électrique selon la revendication 2 caractérisé par le fait que les interrupteurs (T1, T2, T3, T4) sont commandés en parallèle.

4. Ensemble d'alimentation électrique selon la revendication 2 ou 3 caractérisé par le fait que les interrupteurs (T1... T4 ; T) sont constitués par des semi-conducteurs, notamment des transistors MOS.

5. Ensemble d'alimentation électrique selon l'une quelconque des revendications 2 à 4 caractérisé par le fait

27

que la fréquence des coupures, établies par les moyens de commande (8, 108) est supérieure à la fréquence des ondes générées par la machine, notamment de l'ordre de 8 KHz ou plus.

6. Ensemble d'alimentation électrique selon l'une quelconque des revendications 2 à 5 caractérisé par le fait que les moyens de commande (8) sont prévus pour interrompre le découpage lorsque la vitesse de rotation du moteur ------- -------- atteint une valeur telle, qu'il devient préférable de retrouver le fonctionnement normal à simples diodes.

7. Ensemble d'alimentation électrique selon l'une quelconque des revendications précédentes caractérisé par le fait qu'il comporte des interrupteurs commandés (t1, t2, t3) branchés de l'autre côté du pont redresseur (R), l'alternateur (1) pouvant fonctionner en moteur électrique par une commande judicieuse des interrupteurs.

8. Ensemble d'alimentation électrique selon l'une quelconque des revendications précédentes caractérisé par le fait qu'il comporte des moyens (L, 108) permettant d'imbriquer les créneaux de courant délivrés par les enroulements successifs des phases de l'alternateur, en vue de réaliser automatiquement un lissage du courant de charge fourni à la batterie et/ou au réseau de bord.

9. Ensemble d'alimentation électrique selon la revendication 8 caractérisé par le fait qu'il comporte un alternateur (101) à quatre enroulements de phase disposés en étoile.

10. Ensemble d'alimentation électrique selon la revendication 9 caractérisé par le fait que les enroulements opposés de l'alternateur (101) forment deux couples, la coupure du courant dans les enroulements de chaque couple étant simultanée.

11. Machine électrique tournante, en particulier alternateur, pour un ensemble d'alimentation électrique selon l'une quelconque des revendications précédentes, caractérisée par le fait que sa force électromotrice, lorsqu'elle est entraînée à une vitesse correspondant à celle du moteur tournant au ralenti, est inférieure à la tension de la batterie.

FIG. 1

FIG. 2

FIG. 3

FIG. 4

FIG. 5

FIG. 6

100 Volts

40 Volts

14 Volts

to          temps

FIG. 9

FIG. 10

0251916

V

20v

1200 t/mn

N

FIG. 7

I

16

35A  15  K

14

1800 t/mn

N

FIG. 8

E

107  +

d1  d2  d3  d4

101

b1  b4

S

108  L  M  103

s1  b2  b3

s2

D1  T1  T2  D2  T3  D3  T4  D4

106

FIG.13

s1

2

FIG. 14

FIG. 11

FIG. 12

## FIG.15

## FIG.16

## FIG.17

## FIG.18

FIG. 19

FIG. 20

FIG. 21

**Office européen des brevets**

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | FR-A-2 089 190 (NIPPONDENSO K.K.)<br>* Figures 3,4; revendications * | 1-11 | H 02 J 7/14 |
| | --- | | |
| A | DE-A-2 013 189 (CITROEN SA)<br>* Figure 5 * | 1 | |
| | --- | | |
| A | DE-A-3 432 128 (MITSUBISHI) | | |
| | --- | | |
| A | FR-A-1 486 382 (JOSEPH LUCAS LTD) | | |
| | --- | | |
| A | DE-A-2 240 486 (ROBERT BOSCH GmbH) | | |
| | --- | | |
| A | FR-A-2 481 852 (ROBERT BOSCH GmbH) | | |
| | --- | | |
| A | US-A-3 400 318 (JOSEPH LUCAS LTD.) | | |
| | ----- | | |

DOMAINES TECHNIQUES RECHERCHES (Int Cl 4)

H 02 J
H 02 P

Le présent rapport de recherche a été établi pour toutes les revendications

| Lieu de la recherche | Date d'achèvement de la recherche | Examinateur |
|---|---|---|
| LA HAYE | 01-10-1987 | BEYER F. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82